**Europäisches Patentamt**

**European Patent Office**

**Office européen des brevets**

(19)

(11) Veröffentlichungsnummer : **0 192 631**
**B1**

(12) **EUROPÄISCHE PATENTSCHRIFT**

(45) Veröffentlichungstag der Patentschrift :
05.04.89

(51) Int. Cl.⁴ : **B 01 D 23/10, C 02 F 3/04**

(21) Anmeldenummer : **86890001.0**

(22) Anmeldetag : **02.01.86**

(54) **Bodenkörper-Filterkammer.**

(30) Priorität : **11.01.85 AT 61/85**

(43) Veröffentlichungstag der Anmeldung :
**27.08.86 Patentblatt 86/35**

(45) Bekanntmachung des Hinweises auf die Patenterteilung : **05.04.89 Patentblatt 89/14**

(84) Benannte Vertragsstaaten :
**AT BE CH DE FR GB IT LI LU NL SE**

(56) Entgegenhaltungen :
**AT--B-- 201 003**
**AT--B-- 241 372**
**CH--A-- 521 776**
**FR--A-- 2 030 744**
**US--A-- 590 868**
**Die Akte enthält technische Angaben, die nach dem**
**Eingang der Anmeldung eingereicht wurden und die**
**nicht in dieser Patentschrift enthalten sind.**

(73) Patentinhaber : **STOISER & WOLSCHNER Alleininha-**
**ber Dipl.-Ing. Heinz Wolschner SW-span-Kläranlagen-**
**Umwelttechnik**
**Bahnstrasse 87 u. 93**
**A-9020 Klagenfurt (Kärnten) (AT)**

(72) Erfinder : **Polzer, Erich, Dr.**
**Pischeldorferstrasse 10**
**A-9020 Klagenfurt (Kärnten) (AT)**
Erfinder : **Wolschner, Heinz, Dipl.-Ing.**
**Moosburgerstr. 51**
**A-9021 Krumpendorf (Kärnten) (AT)**

(74) Vertreter : **Beer, Otto, Dipl.-Ing. et al**
**Lindengasse 8**
**A-1071 Wien (AT)**

## Beschreibung

Die Erfindung betrifft eine Bodenkörper-Filterkammer zur Reinigung von verunreinigtem Wasser, insbesondere zur Reinigung von anaerob oder aerob wenigstens teilweise vorgereinigtem kommunalem Abwasser, mit mehreren, mit Luftzwischenräumen übereinander angeordneten Filterschichten, durch die das zu reinigende Wasser hindurchtropft und dabei gereinigt wird, wobei die Filterschichten in tassenförmigen Trögen aufgenommen sind, deren Böden flüssigkeitsdurchlässig ausgebildet sind und wobei die tassenförmigen Tröge von der jeweils darunter angeordneten Filterschichte distanziert sind. Diese Bodenkörper-Filterkammer ist insbesondere zur Reinigung verunreinigter Abwässer mit einem Schwebstoffgehalt von kleiner als 0,3 mg/l, wie sie nach anaerober oder aerober Vorreinigung kommunaler Abwässer anfallen, bestimmt.

Derartige Bodenkörper-Filterkammern sind Reinigungsanlagen für kommunale Abwässer, bei denen die Reinigung in einem vom umgebenden Untergrund wasserdicht abgeschlossenen, drainagierten Bodenraum vor sich geht. Diese Anlagen verfügen über einen mikrobiellen Bewuchs an der Beschikkungsebene (Biokruste). In dieser Biokruste gehen aerobe Umsetzungs- und Zersetzungsprozesse vor sich. Je nach der Intensität der Beschickung mit Abwasser dauert es unterschiedlich lange, bis sich diese Biokruste ausgebildet hat. Eine voll ausgebildete Biokruste hemmt allerdings den Wasserdurchtritt. Durch die fortschreitende Ausbreitung der Biokruste wird das anfallende Abwasser aus den Faulanlagen gleichmäßig über die Fläche der Anlage verteilt. Dieser Teil der Beschickungsebene, der durch starken Bewuchs gekennzeichnet ist, verhindert ein weiteres Einsickern des zufließenden bzw. aufgestauten Abwassers.

Die Ausbildung von Wasserlacken in einer Bodenkörper-Filterkammer verringert ihre Reinigungskraft erheblich. Es ist daher notwendig, eine hinreichend große Fläche vorzusehen, um eine Verschlammung der Filterschichte zu verhindern bzw. zu verzögern.

Auf Grund einschlägiger Vorschriften (z. B. ÖNORM B 2502) ist es aus diesem Grunde auch notwendig, Filterkammern mehrmals, z. B. viermal jährlich auf ihre Durchlässigkeit hin zu prüfen. Wird eine Verschlammung der Filterschichte festgestellt, so ist diese abzuheben und durch neues Material zu ersetzen. Gemäß der ÖNORM B 2502 sind Filterkammern mit 2 m²/EGW (EGW = Einwohnergleichwert) zu bemessen.

Da der mikrobielle Abbau des zu reinigenden Abwassers lediglich in der obersten Filterschichte (bis zu 5 cm Tiefe) vor sich geht, erfordern die bekannten Bodenkörper-Filterkammern sehr große Flächen.

Es ist daher auch schon vorgeschlagen worden, bei biologischen Reinigungsanlagen mehrere Filter übereinander anzuordnen. In diesem Zusammenhang wird auf die AT-B-241 372 und 201 003 verwiesen, aus welch letzterer eine Bodenkörper-Filterkammer der eingangs genannten Gattung bekannt ist, die ohne nachgeschaltetes Nachklärbecken betrieben werden kann. Bei der aus der AT-B-201 003 bekannten biologischen Reinigungsanlage liegen die tassenförmigen Tröge auf an der Innenseite des Gehäuses angeordneten Vorsprüngen auf, so daß sie von der jeweils darunterliegenden Filterschichte distanziert sind. Auf Grund der erwähnten Vorsprünge lassen sich die Tröge nur schwer aus dem Gehäuse entfernen bzw. in dieses einsetzen.

Der Erfindung liegt die Aufgabe zugrunde, die bekannten Bodenkörper-Filterkammern zu verbessern und dafür zu sorgen, daß jede Filterebene nur mit soviel Abwasser beschickt wird, wie ohne Überstau unter Gewährleistung einer hinreichenden Reinigung des Abwassers durch die Schicht hindurchtropfen kann.

Erfindungsgemäß wird diese Aufgabe dadurch gelöst, daß die Böden der tassenförmigen Tröge aus porösem Sickerbeton bestehen und durch radial verlaufende Rippen versteift sind, daß die radial verlaufenden Rippen über die Oberseite der Böden vorstehend angeordnet und mit diesen verbunden sind, daß die radial außen liegenden Enden der Rippen an eine den hochgezogenen Rand der Tröge bildenden Ringrippe anschließen und daß im Bereich der radial außen liegenden Enden der Rippen nach oben weisende Vorsprünge vorgesehen sind, welche die Böden der jeweils darüberliegenden Tröge von der Filterschichte distanzieren. Damit ist gewährleistet, daß jede Filterebene nur mit soviel Abwasser beschickt wird, wie ohne Beeinträchtigung der Gesamtreinigungswirkung gereinigt werden kann.

Für die Leistungsfähigkeit der erfindungsgemäßen Anlage ist auch die Verwendung besonderer Filtermedien, im Gegensatz zu den bisher vorgeschlagenen Tropfkörpern (vgl. insbesondere AT-B-241 372), von Vorteil.

So kann vorgesehen sein, daß eine oder mehrere der Filterschichten Sand mit einer Körnung von maximal 5 mm, vorzugsweise 1 bis 2 mm, enthält.

Eine weitere Möglichkeit besteht darin, daß eine oder mehrere der Filterschichten aus mit Humus vermischtem Sand bestehen. Besonders gute Ergebnisse werden erzielt, wenn eine oder mehrere der Filterschichten wenigstens zwei unterschiedliche Lagen aufweist, und wenn eine oder mehrere der Filterschichten eine obere Lage, enthaltend ein Gemisch aus Sand und Kunststoffschnitzeln und eine untere Lage aus Kunststoffschnitzeln aufweist. Bei dieser Ausführungsform bewährt es sich, wenn zwischen den Lagen der Filterschichten ein feinmaschiges Gitter vorgesehen ist. Durch die Kunststoffschnitzel wird eine Verstopfung der Filterschicht verhindert und das feinmaschige Gitter verhindert, daß Sand in die untere Lage aus Kunststoffschnitzeln eingeschlämmt wird.

Da die Böden der Tröge gemäß der Erfindung dadurch flüssigkeitsdurchlässig ausgebildet sind, daß die Böden der Tröge aus porösem Sickerbeton bestehen, empfiehlt es sich, auf den flüssigkeitsdurchlässigen Böden der tassenförmigen Tröge Filtermatten, beispielsweise aus Glasfaservlies, aufzulegen. Durch diese Maßnahmen wird verhindert, daß das Filtermedium durch die Böden der Tröge nach unten ausfließt oder die Böden verstopft werden.

In einer praktischen Ausführungsform der erfindungsgemäßen Anlage ist vorgesehen, daß die tassenförmigen Tröge in einem Gehäuse angeordnet sind und daß das Wasser aus dem Gehäuse unten über ein in eine Schichte aus Kies eingebettetes Drainagerohr abgezogen wird, daß auf der Oberseite der Schichte aus Sand und/oder Kies eine Filtermatte angeordnet ist und daß über der Schichte aus Kies, in die das Drainagerohr eingebettet ist, eine Sandschichte vorgesehen ist, wobei die Sandschichte von der Kiesschichte durch eine Filtermatte getrennt ist. Das die tassenförmigen Tröge aufnehmende Gehäuse kann auch aus mehreren Elementen zusammengesetzt sein.

Weitere Einzelheiten und Merkmale der Erfindung ergeben sich aus der nachstehenden Beschreibung des in der Zeichnung schematisch und im Vertikalschnitt wiedergegebenen Ausführungsbeispiels einer Bodenkörper-Filterkammer.

Die Bodenkörper-Filterkammer besitzt ein Gehäuse 1, das aus mehreren, beispielsweise aus Beton gefertigten Elementen zusammengesetzt ist, und oben über einen Putzschacht zwecks Reinigung und Prüfungsarbeiten zugänglich ist. Im Gehäuse 1 mündet oben etwa in der Mitte desselben ein Zulaufrohr 3 für das zu reinigende Abwasser aus. Am Boden 5 des Gehäuses 1 liegt ein Drainagerohr 4 als Ableitung für das gereinigte Wasser auf.

Im Inneren des Gehäuses 1 sind im gezeigten Ausführungsbeispiel drei tassenförmige Tröge 30 vorgesehen. Jeder der tassenförmigen Tröge 30 kann mit einer Filterschichte aus Sand, die etwa 8 bis 10 cm dick ist und eine Kornung von maximal 5 mm, vorzugsweise eine Körnung von 1 bis 2 mm besitzt, gefüllt sein. Der unterste Trog 30 ist durch Distanzklötze 13 abgestützt.

An Stelle der Ausführung des Gehäuses 1 aus Beton kann das Gehäuse 1 auch teilweise oder zur Gänze aus Stahl oder entsprechend stabilem Kunststoff gefertigt sein.

Unter der Austrittsöffnung des Zulaufrohres 3 für das zu reinigende Abwasser ist eine dieses verteilende Vorrichtung 41 vorgesehen. Die Verteilvorrichtung kann auch flach kegelförmig ausgebildet sein.

Bei der gezeigten Ausführungsform sind die tassenförmigen Tröge 30 alle gleich groß ausgebildet. Jeder tassenförmige Trog 30 besitzt einen Boden 31 aus porösem Sickerbeton. Die seitlichen Ränder 32 und die Versteifungsrippen 33 sind aus dichtem Beton mit größerer Festigkeit (Stahlbeton) hergestellt, wobei die Rippen 33 und die Ränder 32 mit dem Boden 31 verbunden sind. Dies kann z. B. dadurch erreicht werden, daß zur Herstellung der Tröge 30 eine Form verwendet wird, in der die Tröge 30 mit nach unten weisenden Rippen 33 und Rändern 32 und nach oben weisenden Böden 31 hergestellt werden, wobei zunächst der Beton für die Rippen 33 und die Ränder 32 und noch vor dem Abbinden desselben die grobe Betonmischung (Sickerbeton) für den Boden 31 eingebracht wird.

Am äußeren Ende jeder Rippe 33 ist ein nach oben weisender Vorsprung 34 vorgesehen, auf dem der jeweils darüber angeordnete Trog 30 aufliegt. Im gezeigten Beispiel sind insgesamt drei Rippen 33 und dementsprechend drei Vorsprünge 34 vorgesehen.

Die Filterschichten 35 in jedem Trog 30 bestehen aus zwei Lagen, nämlich einer unteren Lage 36 aus Kunststoffschnitzeln (z. B. aus Polypropylen) und einer oberen Lage 37 aus einem Gemisch aus Sand und Kunststoffschnitzeln. Zwischen den Lagen 36 und 37 ist ein feinmaschiges Gitter 42 (nach Art eines Fliegengitters) vorgesehen.

Im Rahmen der Erfindung müssen nicht alle Filterschichten 35 gleich ausgebildet sein, obwohl dies bevorzugt ist.

Um zu verhindern, daß Material aus der Filterschicht 35 durch die Böden 31 der Tröge 30 gespült wird, kann der Boden 31 und die Innenfläche der hochgezogenen Ränder jedes Troges 30 durch eine Filtermatte, beispielsweise eine Matte aus Glasfaservlies, bedeckt sein.

Das Drainagerohr 4 ist bei der gezeigten Ausführungsform in eine Kiesschichte 38 (Körnung 16 bis 32 mm) eingebettet, über der eine Sandschichte 39 (Körnung 0 bis 4 mm) angeordnet ist. Zwischen der Kiesschichte 38 und der Sandschichte 39 ist eine Filtermatte 40 z. B. aus Kunststoff- oder Glasfaservlies angeordnet. Auf der Sandschichte 39 kann noch eine Filtermatte aufliegen.

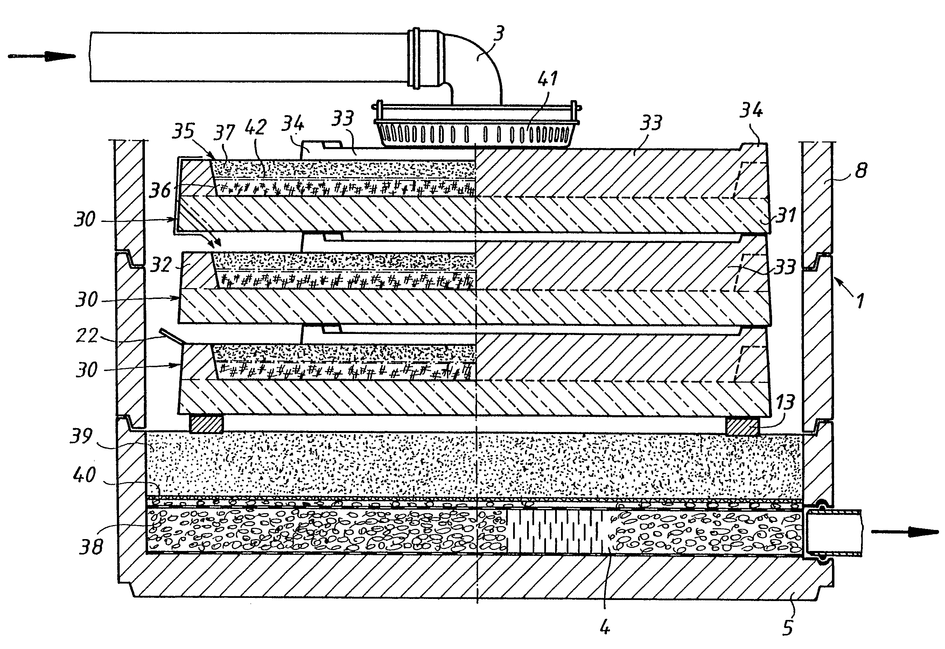

Bei der gezeigten Ausführungsform gelangt nicht durch die Filterschichte 35 sickerndes Wasser längs der Außenseiten des Randes 32 entlang der in Fig. 2 beim obersten Trog 30 links eingezeichneten Pfeile in den Bereich der Filterschichte 35 des darunterliegenden Troges 30. Dabei sickert wenigstens ein Teil des Wassers durch den äußeren Rand des porösen Bodens 31 des Troges 30, wie dies in der Zeichnung links oben durch Pfeile angedeutet ist.

Um zu verhindern, daß Wasser unmittelbar aus den Trögen 30 nach unten zur Sandschichte 39 gelangt, können an den Rändern der Tröge 30 Leitelemente 22 vorgesehen sein.

Gemäß einer nicht gezeigten Variante kann das Drainagerohr 4 mit einer innerhalb oder außerhalb des Gehäuses 1 hochgeführten Entlüftung ausgerüstet sein.

**Patentansprüche**

1. Bodenkörper-Filterkammer zur Reinigung von verunreinigtem Wasser, insbesondere zur Reinigung von anaerob oder aerob wenigstens teilweise vorgereinigtem kommunalem Abwasser, mit mehreren, mit Luftzwischenräumen übereinander angeordneten Filterschichten (35), durch die das zu reinigende Wasser hindurchtropft und dabei gereinigt wird, wobei die Filterschichten (35) in tassenförmigen Trögen (30) aufgenommen sind, deren Böden (31) flüssigkeitsdurchlässig ausgebildet sind und wobei die tassenförmigen Tröge (30) von der jeweils darunter angeordneten Filterschichte (35) distanziert sind, dadurch gekennzeichnet, daß die Böden (31) der tassenförmigen Tröge (30) aus porösem Sickerbeton bestehen und durch radial verlaufende Rippen (33) versteift sind, daß die radial verlaufenden Rippen (33) über die Oberseite der Böden (31) vorstehend angeordnet und mit diesen verbunden sind, daß die radial außen liegenden Enden der Rippen (33) an eine den hochgezogenen Rand (32) der Tröge (30) bildenden Ringrippe anschließen und daß im Bereich der radial außen liegenden Enden der Rippen (33) nach oben weisende Vorsprünge (34) vorgesehen sind, welche die Böden (31) der jeweils darüberliegenden Tröge (30) von der Filterschichte (35) distanzieren.

2. Filterkammer nach Anspruch 1, dadurch gekennzeichnet, daß eine oder mehrere der Filterschichten (35) Sand mit einer Körnung von maximal 5 mm, vorzugsweise 1 bis 2 mm enthält.

3. Filterkammer nach Anspruch 1 oder 2, dadurch gekennzeichnet, daß eine oder mehrere der Filterschichten (35) aus mit Humus vermischtem Sand bestehen.

4. Filterkammer nach einem der Ansprüche 1 bis 3, dadurch gekennzeichnet, daß eine oder mehrere der Filterschichten (35) wenigstens zwei unterschiedliche Lagen (36, 37) aufweisen und daß eine oder mehrere der Filterschichten (35) eine obere Lage (37), enthaltend ein Gemisch aus Sand und Kunststoffschnitzeln und eine untere Lage (36) aus Kunststoffschnitzeln aufweisen.

5. Filterkammer nach Anspruch 4, dadurch gekennzeichnet, daß zwischen den Lagen (36, 37) der Filterschichten (35) ein feinmaschiges Gitter (42) vorgesehen ist.

6. Filterkammer nach einem der Ansprüche 1 bis 5, dadurch gekennzeichnet, daß die tassenförmigen Tröge (30) in einem Gehäuse (1) angeordnet sind und daß das Wasser aus dem Gehäuse (1) unten über ein in eine Schichte (38) aus Kies eingebettetes Drainagerohr (4) abgezogen wird, daß auf der Oberseite der Schichte (38) aus Kies eine Filtermatte (40) angeordnet ist und daß über der Schichte (38) aus Kies, in die das Drainagerohr (4) eingebettet ist, eine Sandschichte (39) vorgesehen ist, wobei die Sandschichte (39) von der Schichte (38) aus Kies durch die Filtermatte (40) getrennt ist.

## Claims

1. A gravity filter chamber for purifying contaminated water, more particularly for purifying municipal waste water after at least partial previous anaerobic or aerobic purification, comprising a number of superposed filter beds (35) separated by air gaps and through which the water is purified by dripping, the filter beds (35) being received in cup-like troughs (30) having fluid-tight bottoms (31), each trough (30) being spaced apart from the filter bed (35) underneath, characterised in that the bottoms (31) of the cup-like troughs (30) are made of porous permeable concrete and are reinforced by radial ribs (33), the radial ribs (33) project over the bottoms (31) and are connected thereto, the radially-outward ends of the ribs (33) are connected to an annular rib constituting the raised edge (32) of the troughs (30), and upward projections (34) are provided near the radially-outward ends of the ribs (33) and maintain a distance between each filter bed (35) and the bottom (31) of the trough (30) above it.

2. A filter chamber according to claim 1, characterised in that one or more filter beds (35) contains sand having a particle size of not more than 5 mm, preferably 1 to 2 mm.

3. A filter chamber according to claim 1 or 2, characterised in that one or more filter beds (35) are of sand mixed with humus.

4. A filter chamber according to any of claims 1 to 3, characterised in that one or more filter beds (35) contain at least two different layers (36, 37) and one or more filter beds (35) comprise a top layer (37) containing a mixture of sand and plastics chips, and a bottom layer (36) of plastics chips.

5. A filter chamber according to claim 4, characterised in that a fine-meshed lattice (42) is disposed between the layers (36, 37) of the filter beds (35).

6. A filter chamber according to any of claims 1 to 6, characterised in that the cup-like troughs (30) are disposed in a casing (1), water is drawn off the bottom of the casing (1) through a drainage pipe (4) embedded in a gravel layer (38), a filter mat (40) is disposed on the top of the gravel layer (38), and a sand layer (39) is disposed above the gravel layer (38) in which the drainage pipe (4) is embedded, the sand layer (39) being separated from the gravel layer (38) by the filter mat (40).

## Revendications

1. Chambre à filtration de filtre agissant par gravité servant à l'épuration d'eau polluée, en particulier à l'épuration d'eaux d'égout de ville ayant subi une pré-épuration anaérobie ou aérobie au moins partielle, comportant plusieurs couches de filtration (35) superposées avec des couches d'air entre elles, à travers lesquelles s'égoutte en s'épurant l'eau à épurer, les couches de filtration (35) se trouvant dans des bacs (30) en forme de tasse, dont les fonds (31) sont réalisés de façon à être perméables aux liquides et les bacs (30) étant chacun écartés de la couche de filtration (35) qui se trouve au-dessous, caractérisée en ce que les fonds (31) des bacs (30) en forme de tasse sont en béton filtrant poreux et sont renforcés par des nervures radiales (33), en ce que les nervures radiales (33) sont en saillie sur la face supérieure des fonds (31) auxquels elles sont reliées, en ce que les extrémités extrêmes des nervures radiales (30) vont jusqu'à une nervure annulaire formant le rebord (32) des bacs (30), et en ce que, dans la zone des extrémités externes des nervures radiales (33), sont prévues des saillies (34) dirigées vers le haut et qui écartent le fond (31) du bac (30) du dessus de la couche de filtration (35).

2. Chambre de filtration suivant la revendication 1, caractérisée en ce qu'une ou plusieurs des couches de filtration (35) contiennent du sable de granulation de 5 mm au maximum et de préférence 1 à 2 mm.

3. Chambre de filtration suivant la revendication 1 ou 2, caractérisée en ce qu'une ou plusieurs des couches de filtration (35) sont constituées de sable mélangé avec de l'humus.

4. Chambre de filtration suivant une des revendications 1 à 3, caractérisée en ce qu'une ou plusieurs des couches de filtration (35) se composent d'au moins deux couches différentes et en ce qu'une ou plusieurs des couches de filtration (35) ont une couche supérieure (37) contenant un mélange de sable et de bouts de matière plastique et une couche inférieure (36) en bouts en matière artificielle.

5. Chambre de filtration suivant la revendication 4, caractérisée en ce qu'entre les couches (36, 37) des couches de filtration (35) est prévu un treillis à mailles fines.

6. Chambre de filtration suivant une des revendications 1 à 5, caractérisée en ce que les bacs (30) en forme de tasse sont dans une enceinte (1) et en ce que l'eau est évacuée en bas de la cage (1), par un tuyau de drainage (4) noyé dans une couche de gravier, en ce que, sur la face supérieure de la couche de gravier (38) est prévue une natte filtrante (40) et en ce qu'au-dessus de cette couche de gravier (38), dans laquelle est noyé le tuyau de drainage (4), est prévue une couche de sable (39), qui est séparée de la couche de gravier (38) par une natte filtrante (40).